# FASCICULE DE BREVET EUROPEEN

(11) **EP 3 834 614 B1**
(45) Date de publication et mention de la délivrance du brevet: **23.08.2023**
(21) Numéro de dépôt: 20212058.0
(22) Date de dépôt: 04.12.2020
(51) Int. Cl.: A01M 21/04, H05B 6/80

(54) **PROCÉDÉ ET APPAREIL DE DÉSHERBAGE PAR RAYONNEMENT ÉLECTROMAGNÉTIQUE**
VERFAHREN UND VORRICHTUNG ZUR UNKRAUTBEKÄMPFUNG DURCH ELEKTROMAGNETISCHE STRAHLUNG
METHOD AND APPARATUS FOR WEED CONTROL BY ELECTROMAGNETIC RADIATION

(30) Priorité: 11.12.2019 FR 1914126
(43) Date de publication de la demande: 16.06.2021
(73) Titulaire: Commissariat à l'Energie Atomique et aux Energies Alternatives, 75015 Paris (FR)
(72) Inventeur: DALL'OMO, Christophe, 38054 GRENOBLE cedex 09 (FR); BOURGUIGNON, Jacques, 38054 GRENOBLE cedex 09 (FR); FINAZZI, Giovanni, 38054 GRENOBLE cedex 09 (FR); MATRINGE, Michel, 38054 GRENOBLE cedex 09 (FR)
(74) Mandataire: INNOV-GROUP

(56) Documents cités:
- WO-A2-03/099004
- BE-A- 795 218
- US-A1- 2003 037 482

## Description

L'invention concerne un procédé et un appareil de désherbage par rayonnement électromagnétique.

Les procédés de désherbage par rayonnement électromagnétique consistent à appliquer sur les plantes à éliminer un rayonnement électromagnétique qui les détruit. Typiquement, un fort rayonnement électromagnétique appliqué dessèche ces plantes sur pied. Le fonctionnement de tels procédés de désherbage est bien connu. Par exemple, un procédé et un appareil de désherbage sont divulgués dans la demande WO2018112531A1.

De l'état de la technique est également connu de BE795218A, WO03/099004A2 et US2003/037482A1. Les procédés de désherbages décrits dans ces documents n'utilisent pas un rayonnement électromagnétique polarisé.

Il est souhaitable de diminuer la consommation d'énergie de ces procédés de désherbage par rayonnement électromagnétique sans pour autant en diminuer l'efficacité. L'efficacité d'un procédé de désherbage est la proportion des plantes à exterminer et effectivement éliminées par le procédé de désherbage par rapport à la population totale de ces plantes à éliminer qui ont été soumises à ce procédé de désherbage. Typiquement, les procédés de désherbage essaient d'atteindre une efficacité de 100 %, c'est-à-dire que 100 % des plantes ciblées par ce procédé de désherbage sont éliminées.

Pour diminuer la consommation d'énergie des procédés de désherbage par rayonnement électromagnétique, il a déjà été proposé d'optimiser l'agencement de l'applicateur qui émet le rayonnement électromagnétique sur les plantes à éliminer. C'est par exemple ce qui est enseigné dans la demande WO2018112531A1. Plus précisément, la demande WO2018112531A1 divulgue un applicateur dont l'agencement conduit à créer des modes de propagation électromagnétique particuliers (ondes lentes) qui permettent de confiner l'énergie et de répartir de manière quasi-uniforme les niveaux de champs électromagnétiques à l'intérieur de l'applicateur afin d'améliorer l'efficacité du désherbage et afin d'obtenir une direction de propagation des ondes électromagnétiques perpendiculaires aux fentes de l'applicateur.

L'invention vise, à efficacité égale de désherbage, à diminuer la consommation d'énergie d'un procédé de désherbage par rayonnement électromagnétique. Elle a donc pour objet un procédé de désherbage conforme à la revendication 1.

L'invention a également pour objet un appareil de désherbage pour la mise en oeuvre du procédé ci-dessus.

Ce texte divulgue aussi un procédé de désherbage par rayonnement électromagnétique, ce procédé comportant les étapes suivantes :
a) une étape de placement d'une face émissive d'un applicateur en vis-à-vis de d'une plante à éliminer, puis
b) une étape d'application, directement sur la surface foliaire de la plante à éliminer, d'une dose létale d'un rayonnement électromagnétique polarisé rayonné par la face émissive de l'applicateur, 80% de la puissance de ce rayonnement électromagnétique étant située dans la bande de fréquences allant de 3 GHz à 300 GHz,
caractérisé en ce que :
- lors de l'étape b), la dose létale appliquée par le rayonnement électromagnétique sur la surface foliaire de la plante à éliminer est inférieure à 1,8D_{Lo}(fₘ), où D_{Lo}(fₘ) est une dose optimale exprimée en J/cm² et définie par la relation suivante : D_{Lo}(fₘ) = 141,4 - 0,466fₘ, où fₘ est une fréquence moyenne du rayonnement électromagnétique appliqué, exprimée en GHz, cette fréquence moyenne étant égale à la moyenne arithmétique des fréquences du rayonnement électromagnétique appliqué en pondérant chacune de ces fréquences par la puissance du rayonnement électromagnétique à cette fréquence, et
- l'application du rayonnement électromagnétique comporte l'application d'un rayonnement électromagnétique polarisé à la fois sur des plantes à éliminer et sur des plantes à préserver, la surface foliaire des plantes à éliminer s'étendant principalement parallèlement à un premier plan horizontal ou vertical et la surface foliaire des plantes à préserver s'étendant principalement parallèlement à un second plan perpendiculaire au premier plan,
- lors de l'étape b), le rayonnement électromagnétique appliqué présente une polarisation rectiligne dont le vecteur de polarisation est parallèle au premier plan et la dose appliquée de ce rayonnement électromagnétique est une dose létale pour la plante à éliminer et une dose non-létale pour la plante à préserver, une dose létale étant une dose qui entraîne la mort de plus de 95 % des plantes à éliminer exposées à cette dose lorsque la plante à éliminer est choisie dans un groupe de deux plantes constitué de l'arabette des dames (*Arabidopsis thaliana*) et le ray-grass (*Lolium perenne*), et une dose non-létale pour la plante à préserver est une dose qui entraîne la mort de moins de 50 % des plantes à préserver exposées à cette dose non-létale lorsque la plante à éliminer est l'autre des plantes du groupe de deux plantes.

L'invention sera mieux comprise à la lecture de la description qui va suivre, donnée uniquement à titre d'exemple non limitatif et faite en se référant aux dessins sur lesquels :
- la figure 1 est une illustration schématique d'un premier mode de réalisation d'un appareil de désherbage par rayonnement électromagnétique ;
- la figure 2 est un organigramme d'un procédé de désherbage à l'aide de l'appareil de la figure 1 ;
- les figures 3 et 4 sont des illustrations schématiques, respectivement, d'un deuxième et d'un troisième modes de réalisation d'un appareil de désherbage par rayonnement électromagnétique.

Dans ces figures, les mêmes références sont utilisées pour désigner les mêmes éléments. Dans la suite de cette description, les caractéristiques et fonctions bien connues de l'homme du métier ne sont pas décrites en détail.

### Chapitre I : Exemples de modes de réalisation.

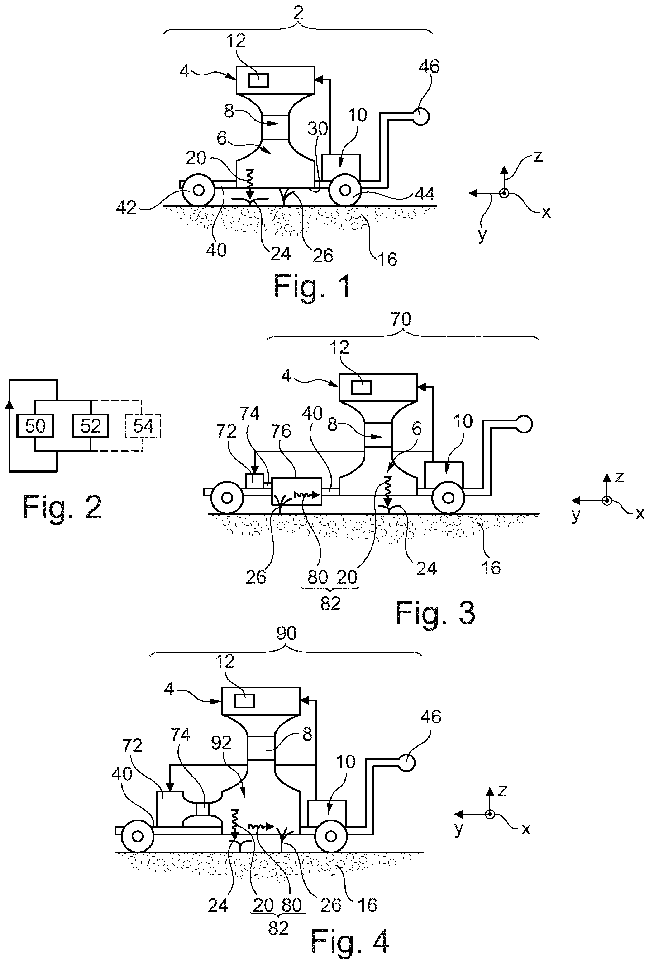

La figure 1 représente un appareil 2 de désherbage par rayonnement électromagnétique. L'appareil 2 comporte :
- un ensemble 4 d'une ou plusieurs sources de rayonnement électromagnétique,
- un applicateur 6 apte à appliquer le rayonnement électromagnétique sur la plante à éliminer,
- un guide d'ondes 8 qui transporte le rayonnement électromagnétique généré par l'ensemble 4 de sources de rayonnement électromagnétique jusqu'à l'applicateur 6, et
- une source 10 d'alimentation.

L'ensemble 4 comporte dans ce premier mode de réalisation une seule source 12 de rayonnement électromagnétique polarisé. La source 12 génère, lorsqu'elle est alimentée par la source 10 d'alimentation, un rayonnement électromagnétique qui est guidé par le guide 8 puis rayonné dans l'air par l'applicateur 6 sous la forme d'un rayonnement électromagnétique 20.

Le rayonnement 20 est un rayonnement dont l'essentiel de la puissance est comprise entre 3 GHz et 300 GHz. Ici, par l'expression « l'essentiel de la puissance d'un rayonnement électromagnétique est compris entre fₘᵢₙ et fₘₐₓ, où fₘᵢₙ et fₘₐₓ sont des fréquences », on désigne le fait qu'au moins 80 % et, de préférence au moins 90 % ou 95 % de la puissance du rayonnement électromagnétique est comprise entre ces fréquences fₘᵢₙ et fₘₐₓ. Autrement dit, la surface du spectre de puissance de ce rayonnement électromagnétique située entre les fréquences fₘᵢₙ et fₘₐₓ représente au moins 80% et, de préférence au moins 90% ou 95%, de la surface totale de ce spectre de puissance.

Ici, l'essentiel de la puissance du rayonnement 20 est compris entre 3 GHz et 30 GHz. Dans ce premier mode de réalisation, le rayonnement 20 est un rayonnement monochromatique. Dans cette description, on considère qu'un rayonnement électromagnétique est monochromatique de fréquence f, si l'essentiel de sa puissance est comprise entre 0,98f et 1,02f. A titre d'illustration, la fréquence f₂₀ du rayonnement 20 est égale à 5,8 GHz. A cet effet, la source 12 génère un rayonnement électromagnétique monochromatique à cette fréquence f₂₀.

Dans ce premier mode de réalisation, la plante à éliminer est une dicotylédone de la famille des brassicacées, l'arabette des dames (*Arabidopsis thaliana*). Dans ce cas-là, la plante 24 présente une surface foliaire qui s'étend principalement parallèlement au plan du sol.

Par « plan du sol », on désigne le plan dans lequel s'étend principalement le sol 16 dans lequel a poussé la plante 24. Ici, le plan du sol est horizontal et parallèle à deux directions X et Y d'un repère orthogonal X, Y, Z. Z désigne la direction verticale par rapport au plan du sol.

Dans cette demande, on considère que la surface foliaire d'une plante s'étend principalement parallèlement au plan du sol lorsque la longueur du plus petit rectangle horizontal qui contient entièrement la projection orthogonale de cette plante, dans un plan vertical, est parallèle au plan du sol. En général, dans le cas d'une plante dont la surface foliaire s'étend principalement horizontalement, la longueur de ce plus petit rectangle est au moins deux ou trois fois supérieure à sa largeur. Le plus petit rectangle est celui dont la surface est la plus petite. Un rectangle horizontal est un rectangle dont l'un des côtés est horizontal. A l'inverse, si la longueur de ce plus petit rectangle est perpendiculaire au plan du sol, alors on considère que la surface foliaire de la plante s'étend principalement perpendiculairement au plan du sol. Dans ce dernier cas, en général, la longueur verticale de ce plus petit rectangle est au moins deux ou trois fois supérieure à sa largeur horizontale.

Les plantes dont les feuilles s'étendent principalement perpendiculairement au plan du sol sont typiquement des herbes qui poussent verticalement. Un exemplaire d'une telle plante 26 est représenté sur la figure 1. La plante 26 est par exemple une monocotylédone de la famille des poacées (Poceae), le ray-grass (*Lolium perenne*). Dans ce premier mode de réalisation, la plante 26 n'est pas une plante à éliminer mais, au contraire, à préserver.

Dans ce mode de réalisation, la direction de propagation du rayonnement 20 est verticale. De plus, pour accroître l'efficacité du transfert d'énergie entre le rayonnement 20 et la plante 24, le rayonnement 20 est un rayonnement polarisé dont le vecteur de polarisation est parallèle au plan dans lequel s'étend principalement la surface foliaire de la plante 24. Ici, le vecteur de polarisation du rayonnement 20 est donc horizontal. Par exemple, le rayonnement 20 est un rayonnement électromagnétique monochrome, présentant une polarisation rectiligne et horizontale. De plus, dans ce mode de réalisation, le vecteur de polarisation est fixe et constant au cours du temps.

A cet effet, l'applicateur 6 comporte une face émissive 30 horizontale qui rayonne le rayonnement 20 sur la plante 24. La face 30 est typiquement plane. Par exemple, elle est rectangulaire, elliptique ou circulaire. La direction de propagation du rayonnement 20 est perpendiculaire à la face 30. Par exemple, l'applicateur 6 est une antenne de type cornet ("horn antenna" en anglais) et la face 30 est la face de cette antenne à cornet est en vis-à-vis de la plante 24.

La puissance de la source 12 est configurée pour appliquer une dose létale D₂₀ du rayonnement 20 directement sur la surface foliaire de la plante 24 pendant le désherbage. On rappelle qu'une dose est une densité d'énergie délivrée. Elle correspond à la puissance du rayonnement électromagnétique multipliée par une durée d'application et divisée par la surface sur laquelle le rayonnement électromagnétique est appliqué. Elle s'exprime donc classiquement en J/cm². Il s'agit ici de la dose appliquée directement sur la plante à éliminer, c'est-à-dire de la dose reçue par la surface foliaire de la plante.

Par « dose létale », on désigne une dose qui entraîne la mort de plus de 95 % ou 98 % ou 100 % des plantes à éliminer ciblées exposées à cette dose. On appelle aussi « dose létale minimale » la plus petite des doses létales. Il a été observé que la dose létale minimale varie en fonction, notamment, du stade de développement de la plante à éliminer. Il a donc été défini ce qui est appelé ici une "dose optimale" et qui est définie comme étant la plus petite dose létale indépendante du stade de développement de la plante à éliminer. Il a été établi que cette dose optimale dépend de la fréquence du rayonnement électromagnétique appliqué. Par la suite, la dose optimale est donc notée D_{Lo}(fₘ), où fₘ est la fréquence moyenne du rayonnement électromagnétique appliquée sur la surface foliaire de la plante à éliminer. La fréquence fₘ est égale à la moyenne arithmétique des fréquences du rayonnement électromagnétique appliqué sur la plante à éliminer. Dans cette moyenne arithmétique, chacune de ces fréquences est pondérée par la puissance du rayonnement électromagnétique à cette fréquence.

Il a été démontré par des expérimentations que la dose D_{Lo}(fₘ) diminue approximativement de façon linéaire en fonction de la fréquence fₘ. Dans ce mode de réalisation, cette évolution de la dose D_{Lo}(fₘ) en fonction de la fréquence fₘ est modélisée par la relation suivante : D_{Lo}(fₘ) = 141,4 - 0,466fₘ, où :
- D_{Lo}(fₘ) est la dose optimale exprimée en J/cm², et
- fₘ est la fréquence moyenne du rayonnement électromagnétique appliqué sur la surface foliaire de la plante à éliminer et exprimée en gigahertz (GHz).
La relation ci-dessus est applicable uniquement pour une fréquence fₘ comprise entre 3 GHz et 300 GHz et donc, en particulier, entre 3 GHz et 30 GHz.

Pour économiser de l'énergie, la dose D₂₀ est choisie proche de la dose optimale D_{Lo}(fₘ). Dans le cas particulier du rayonnement 20 monochromatique, la fréquence fₘ est égale à la fréquence f₂₀. Ainsi, la dose D_{Lo}(fₘ) est égale à 138,7 J/cm².

Dans cette description l'expression « une dose proche de la dose D_{Lo}(fₘ) », désigne une dose létale inférieure à 1,8D_{Lo}(fₘ) et, de préférence, inférieure à 1,5D_{Lo}(fₘ) ou à 1,3D_{Lo}(fₘ) ou encore à 1,1D_{Lo}(fₘ) ou inférieure ou égale à D_{Lo}(fₘ). Dans ce mode de réalisation, la dose D₂₀ est choisie égale à la dose D_{Lo}(fₘ).

Une fois la dose D₂₀ connue et connaissant les différentes caractéristiques de l'appareil 2 ainsi que la durée prévisible d'application du rayonnement 20 sur la plante 24, il est possible de déterminer la puissance du rayonnement électromagnétique délivrée par la source 12 qui permet d'obtenir cette dose D₂₀. Par exemple, pour cela, les différentes pertes introduites par les différents éléments traversés par le rayonnement électromagnétique généré par la source 12 avant d'atteindre la plante 24 sont déterminées. Ces pertes dépendent notamment de la configuration du guide d'ondes 8, de la configuration de l'applicateur 6 et de la distance moyenne qui sépare la face émissive 30 de la plante 24. Par exemple, ces pertes sont mesurées expérimentalement à la fréquence f₂₀. Ensuite, la puissance de la source 12 est ajustée pour compenser ces pertes et donc permettre l'application de la dose D₂₀ souhaitée.

La durée prévue d'application du rayonnement 20 est par exemple calculée en fonction de la longueur horizontale, dans la direction Y, de la face émissive 30 et d'une vitesse prédéterminée de déplacement de l'appareil 2 par rapport au sol 16 dans cette direction Y.

Le dimensionnement et la réalisation d'une telle source 12 permettant d'obtenir le rayonnement 20 et la dose D₂₀ sont à la porter de l'homme du métier et ne sont donc pas décrits ici plus en détail.

La source 10 d'alimentation est utilisée pour alimenter l'ensemble 4. Par exemple, il s'agit d'une batterie, d'un groupe électrogène ou d'un transformateur électrique raccordé à un réseau électrique par l'intermédiaire d'un câble.

Dans ce mode de réalisation, l'ensemble 4, l'applicateur 6, le guide 8 et la source 10 sont fixés sur un châssis 40 déplaçable en translation dans la direction Y le long du sol 16. A cet effet, par exemple, le châssis 40 est équipé de roues 42 et 44 qui permettent de faire rouler l'appareil 2 sur le sol 16. Plus précisément, le châssis 40 et les roues 42 et 44 maintiennent en permanence la face émissive 30 horizontale et à une distance prédéterminée du sol 16.

L'appareil 2 comporte aussi une poignée 46 fixée sur le châssis 40. Cette poignée 46 permet à un être humain de déplacer l'appareil 2 parallèlement à la direction Y en le poussant ou en le tirant.

Le procédé de désherbage à l'aide de l'appareil 2 va maintenant être décrit en référence au procédé de la figure 2.

Initialement, les roues 42, 44 de l'appareil 2 sont disposées sur le sol 16.

Ensuite, lors d'une étape 50, l'appareil 2 est déplacé dans la direction Y à une vitesse approximativement égale à la vitesse prédéterminée le long du sol 16. Cela permet de placer la face émissive en vis-à-vis des plantes 24 et 26.

En parallèle, lors d'une étape 52, la source 12 est alimentée. La face émissive 30 de l'applicateur 6 émet donc en permanence le rayonnement 20 sur les plantes 24. Par conséquent, le rayonnement 20 est appliqué sur la plante 24 tant que celle-ci se trouve dessous et à la verticale de la face émissive 30. Ainsi, la durée d'application du rayonnement 20 est égale à la durée pendant laquelle la plante 24 se trouve dessous et à la verticale de cette face émissive 30. Comme la source 12 a été ici configurée au préalable pour que la puissance et la durée d'application du rayonnement 20 correspondent à l'application de la dose D₂₀, cette dose D₂₀ est appliquée sur la surface foliaire de la plante 24 pendant le déplacement de l'appareil 2.

Dans le cas du rayonnement 20 et de la plante 24, il a été déterminé expérimentalement que la dose létale minimale à partir de laquelle 100 % des plantes 24 sont éliminées sont de :
- de 136 J/cm² lorsque la plante 24 est dans son vingtième jour de croissance,
- de 129 J/cm² lorsque la plante 24 est dans son vingt-septième jour de croissance, et
- de 91 J/cm² lorsque la plante 24 est dans son trente-cinquième jour de croissance.

Dans les conditions expérimentales de ce premier mode de réalisation, la dose D₂₀ est égale à 138,7 J/cm². Par conséquent, quel que soit le stade de croissance de la plante 24, ce premier mode de réalisation permet d'éliminer 100% des plantes 24. De plus, à efficacité égale de désherbage de la plante 24, ce premier mode de réalisation utilise une dose beaucoup plus petite que celle habituellement utilisée et consomme donc beaucoup moins d'énergie :
- que si la fréquence f₂₀ était inférieure à 3 GHz (par exemple, égale à 2,45 GHz), ou
- que si à fréquence égale, la dose D₂₀ était choisie supérieure à 1,8D_{Lo}(fₘ).
A titre de comparaison, la demande WO2018112531A1 enseigne d'utiliser une dose létale d'au moins 500 J/cm² pour une fréquence de 2,45 GHz ou de 5,8 GHz.

Dans les mêmes conditions, il a été également déterminé expérimentalement que la dose létale minimale à partir de laquelle 100 % des herbes 26 sont tuées est d'environ 240 J/cm². Ainsi, la dose D₂₀ appliquée au cours de l'étape 52 ne permet pas d'éradiquer complètement les plantes 26. Dès lors, lorsque le procédé de la figure 2 est appliqué sur le sol 16 dans lequel poussent à la fois les plantes 24 et 26, l'application de ce procédé conduit à un désherbage sélectif qui éradique complètement les plantes 24 sans éradiquer complètement les herbes 26.

Le fait que la plante 26 ne soit pas complètement éradiquée par la dose D₂₀ alors que cette même dose permet d'éradiquer complètement la plante 24 est actuellement expliqué par le fait que le transfert d'énergie entre une plante et le rayonnement électromagnétique polarisé est plus efficace lorsque le vecteur de polarisation de ce rayonnement est parallèle au plan dans lequel s'étend principalement la face foliaire et donc les feuilles de cette plante. Ici, la face foliaire de la plante 26 s'étend principalement verticalement suivant Z et donc dans une direction perpendiculaire au vecteur horizontal de polarisation du rayonnement 20. Le transfert d'énergie entre le rayonnement 20 et la plante 26 est alors moins efficace (couplage non optimal entre les feuilles de la plante et l'onde électromagnétique), ce qui expliquerait que la dose létale du rayonnement 20 soit nettement supérieure dans le cas de la plante 26.

La figure 3 représente un appareil 70 de désherbage identique à l'appareil 2 sauf qu'il comporte en plus :
- une source 72 de rayonnement électromagnétique,
- un guide d'onde 74 de rayonnement électromagnétique, et
- un applicateur 76 de rayonnement électromagnétique.

La source 72 génère, lorsqu'elle est alimentée, un rayonnement électromagnétique qui est guidé par le guide 74 puis rayonné par l'applicateur 76 sous la forme d'un rayonnement électromagnétique 80.

Le rayonnement 80 est identique au rayonnement 20 sauf que sa direction de propagation est horizontale et que son vecteur de polarisation est vertical. Ici, la fréquence f₈₀ du rayonnement 80 est donc égale à la fréquence f₂₀.

Dans ce mode de réalisation, le rayonnement électromagnétique global 82 appliqué sur la plante à éliminer est le résultat de l'application des rayonnements 20 et 80. Plus précisément, ici, les plantes 24 et 26 sont successivement exposées aux rayonnements 20 et 80 lorsque l'utilisateur déplace l'appareil 70. L'intervalle de temps entre l'application du rayonnement 80 sur une plante donnée puis l'application du rayonnement 20 sur la même plante est court, c'est-à-dire inférieur à 1 seconde ou inférieur à 0,5 seconde.

La dose létale totale D₈₂ du rayonnement 82 à appliquer sur la plante à éliminer est choisie proche de la dose D_{Lo}(fₘ) comme dans le précédent mode de réalisation. Toutefois, ici, la dose D₈₂ est répartie entre des doses D₂₀ et D₈₀ appliquées, respectivement, par les rayonnements 20 et 80.

Dans ce mode de réalisation, la dose D₈₂ est en plus choisie pour correspondre à une dose létale à la fois pour les plantes 24 et 26. A cet effet, les doses D₂₀ et D₈₀ sont déterminées expérimentalement en tenant compte des indications suivantes.

La dose D₂₀ décrite dans le cas de l'appareil 2 n'est pas létale pour la plante 26. Toutefois, même sans être létale pour la plante 26, elle échauffe quand même sa surface foliaire. Ainsi, la dose D₈₀ peut être inférieure à la dose létale minimale nécessaire pour éliminer la plante 26 si seul le rayonnement 80 était appliqué. La même remarque s'applique au rayonnement 20 lorsqu'il est appliqué en combinaison avec le rayonnement 80.

Par ailleurs, la dose D₈₂ pour éliminer complètement les plantes 24 et 26 est supérieure à la dose D₂₀ décrite dans le cas de l'appareil 2. En effet, la dose D₈₂ tient compte du fait que :
- le vecteur de polarisation du rayonnement 20 n'est pas optimal pour la plante 26, et
- le vecteur de polarisation du rayonnement 80 n'est pas optimal pour la plante 24. Ainsi, la dose D₈₂ est généralement choisie plus proche de 1,8D_{Lo}(fₘ). Dans ce cas, la fréquence fₘ est égale aux fréquences f₂₀ et f₈₀.

De plus, ici, la répartition de la dose D₈₂ entre les doses D₂₀ et D₈₀ est choisie de manière à ce que ces doses D₂₀ et D₈₀ soient égales ou approximativement égales l'une à l'autre. Par exemple, les doses D₂₀ et D₈₀ sont égales ou supérieures à D_{Lo}(fₘ)/1,58. Par exemple, les doses D₂₀ et D₈₀ sont toutes les deux égales à 90 J/cm² ou 100 J/cm² ce qui correspond à une dose D₈₂ de 180 J/cm² ou 200 J/cm². Cette dose D₈₂ est bien inférieure à 249,7 J/cm² (=1,8D_{Lo}(fₘ)) et reste donc nettement inférieure aux doses habituellement utilisée lorsque la fréquence du rayonnement électromagnétique est de 5,8 GHz. De plus, la dose D₈₂ est inférieure à 240 J/cm², c'est-à-dire inférieure à la dose létale qu'il faudrait appliquer à l'aide de l'appareil 2 pour éradiquer complètement à la fois les plantes 24 et 26. Cela montre bien l'existence d'un phénomène de synergie entre les rayonnements 20 et 80 lorsqu'ils sont utilisés ensemble.

Le procédé de désherbage à l'aide de l'appareil 70 est identique à celui décrit en référence à la figure 2 sauf que lors de l'étape 52, les rayonnements 20 et 80 sont appliqués ensemble. Contrairement au cas de l'appareil 2, dans ce cas, le désherbage est non sélectif.

La figure 4 représente un appareil 90 de désherbage identique à l'appareil 70 sauf qu'il comporte un seul applicateur 92 à la place des applicateurs 6 et 76. L'applicateur 92 est apte à appliquer, simultanément, sur les plantes 24 et 26, les rayonnements 20 et 80. A cet effet, il comporte deux entrées, l'une raccordée au guide 8 et l'autre raccordée au guide 74. Dans ce mode de réalisation, le rayonnement électromagnétique global 82 appliqué sur les plantes 24 et 26 est identique à celui décrit en référence à la figure 3 sauf que les rayonnements 20 et 80 sont simultanément appliqués sur les plantes 24 et 26. Le fonctionnement de l'appareil 90 se déduit donc directement des explications données pour l'appareil 70.

### Chapitre II : Variantes

### Variantes du vecteur de polarisation :

Dans un mode de réalisation simplifié, le vecteur de polarisation du rayonnement électromagnétique appliqué sur la surface foliaire des plantes à éliminer est quelconque. Par exemple, le vecteur de polarisation de ce rayonnement électromagnétique est incliné de 45° par rapport au plan où ce vecteur de polarisation est perpendiculaire au plan dans lequel s'étend principalement la surface foliaire de la plante à éliminer. Dans ce cas, le transfert d'énergie entre le rayonnement électromagnétique et la plante à éliminer est moins efficace que si le vecteur de polarisation était parallèle au plan dans lequel s'étend principalement la face foliaire de cette plante à éliminer. Ainsi, dans ce cas, il faut généralement compenser cette moindre efficacité du transfert d'énergie vers la plante à éliminer en augmentant la dose du rayonnement électromagnétique et donc choisir la dose appliquée plutôt entre 1,3D_{Lo}(fₘ) et 1,8D_{Lo}(fₘ). Toutefois, même dans ce mode de réalisation simplifié, la dose létale appliquée et donc la consommation électrique, à efficacité de désherbage égale, reste très inférieure à celle habituellement préconisée.

En variante, l'appareil de désherbage est agencé pour rayonner un rayonnement identique au rayonnement 20 mais dont le vecteur de polarisation est cette fois-ci verticale. Par exemple, pour cela, l'ensemble 4, le guide 8 et l'applicateur 6 de l'appareil 70 sont omis. Dans ce cas, pour la même dose D₂₀, ce sont les herbes 26 qui sont complètement éradiquées alors que les plantes 24 sont préservées au moins en partie.

En variante, les rayonnements 20 et/ou 80 de polarisation rectiligne sont remplacés par des rayonnements identiques mais dont la polarisation est elliptique (droite ou gauche). Dans ce cas, la direction de propagation du rayonnement 20 ou 80 est identique à ce qui a été précédemment décrit mais son vecteur de polarisation tourne dans un plan perpendiculaire à sa direction de propagation. Ainsi, le vecteur polarisation tourne de manière elliptique soit dans un plan horizontal soit dans un plan vertical. Il est aussi possible d'utiliser une polarisation circulaire qui est un cas particulier d'une polarisation elliptique.

Dans une variante simplifiée de l'appareil 70, la source 12, le guide 8 et l'applicateur 6 sont omis et la source 72 est adaptée pour que la polarisation du rayonnement 80 soit une polarisation elliptique ou circulaire dans laquelle le vecteur de polarisation tourne dans un plan vertical. Ainsi, en alternance, le vecteur de polarisation est tantôt vertical et tantôt horizontal. Dès lors, la même source 72 permet de générer les deux polarisations verticale et horizontale.

### Variantes de la dose :

L'appareil 2 peut être configuré pour réaliser un désherbage non sélectif. Pour cela, la puissance de la source 12 est modifiée pour que la dose D₂₀ appliquée lors de l'étape 52 soit supérieure à 240 J/cm². Une telle dose de 240 J/cm² est plus proche de la limite supérieure de 1,8D_{Lo}(fₘ) mais reste toujours dans l'intervalle compris entre 0,5Dₘ(fₘ) et 1,8D_{Lo}(fₘ) qui permet d'économiser de l'énergie à efficacité égale.

Le modèle décrit ici qui permet de calculer la dose D_{Lo}(fₘ) n'est qu'une approximation de la réalité et ne fournit qu'une estimation. En pratique, il se peut que la véritable dose létale minimale indépendante du stade de croissance de la plante à éliminer soit inférieure à la valeur fournie par ce modèle. Dans ce cas, cette véritable dose létale minimale indépendante du stade de croissance de la plante à éliminer est déterminée expérimentalement. Ensuite, la dose létale appliquée par l'appareil de désherbage est choisie inférieure à la dose D_{Lo}(fₘ) calculée avec le modèle décrit ici et supérieure ou égale à cette véritable dose létale minimale déterminée expérimentalement. Généralement, la véritable dose létale indépendante du stade de croissance de la plante à éliminer est toujours supérieure à 0,5D_{Lo}(fₘ) ou à 0,7D_{Lo}(fₘ).

### Variantes de la fréquence :

En variante, le rayonnement électromagnétique qui se propage dans une direction donnée n'est pas un rayonnement monochromatique. Par exemple, il comporte deux ou plus de deux rayonnements électromagnétiques de même polarisation mais à des fréquences différentes situées entre les fréquences fₘᵢₙ et fₘₐₓ. La puissance du rayonnement électromagnétique dans cette direction de propagation est alors répartie entre ces différentes fréquences. Dans ce cas, le spectre de puissance de ce rayonnement électromagnétique comporte un pic à l'emplacement de chacune de ces fréquences et, entre ces fréquences, la puissance est nulle ou pratiquement nulle. Cela permet notamment d'utiliser en parallèle plusieurs sources de rayonnement électromagnétique monochromatique, rayonnant chacune à une fréquence respective. Dans ce cas, la puissance délivrée par chacune de ces sources est inférieure à la puissance de la source 12. L'utilisation de plusieurs sources de rayonnement électromagnétique moins puissantes permet, notamment, de simplifier la fabrication de l'appareil de désherbage.

Dans un autre mode de réalisation, le rayonnement électromagnétique global comporte deux rayonnements électromagnétiques monochromatiques à des fréquences différentes et avec des polarisations différentes. Par exemple, dans l'appareil 70, la fréquence f₈₀ est choisie différente de la fréquence f₂₀.

Dans une autre variante, le spectre de puissance du rayonnement électromagnétique global s'étend continûment sur une plage de fréquences dont la largeur est supérieure à 1 GHz ou 5 GHz. Dans ce cas-là aussi, la puissance du rayonnement électromagnétique global à appliquer sur la plante à éliminer est répartie entre les différentes fréquences de cette plage de fréquences. Cela permet d'utiliser une source de rayonnement électromagnétique dont le maximum de puissance à une fréquence donnée est inférieur à celui de la source 12.

D'autres plages de fréquences sont possibles pour le rayonnement électromagnétique appliqué sur la plante à éliminer. Par exemple, la fréquence du rayonnement électromagnétique global est comprise, en variante, entre 10 GHz et 30 GHz, ou entre 30 GHz et 300 GHz.

### Autres variantes :

Dans un autre mode de réalisation, le rayonnement électromagnétique global est appliqué de façon pulsée, c'est-à-dire par impulsions successives séparées les unes des autres par des intervalles de temps plus longs où le rayonnement électromagnétique n'est pas appliqué. Dans ce cas, la dose appliquée sur la plante à éliminer est égale au cumul des doses appliquées pendant la durée de chacune de ces impulsions. Il est également possible d'appliquer des impulsions de rayonnement électromagnétique ayant un vecteur de polarisation vertical et, en alternance, un vecteur de polarisation horizontal.

De nombreux autres modes de réalisation de l'appareil 2 sont possibles. Par exemple, la poignée 46 peut être remplacée par une attache qui permet d'attacher l'appareil de désherbage à un tracteur motorisé. Dans ce cas, l'appareil de désherbage est tracté par ce tracteur et non pas déplacé à la main par un être humain. L'appareil 2 peut aussi comporter un moteur qui lui permet de se déplacer sans être poussé par un être humain ou tracté par un tracteur. Dans ce dernier cas, un dispositif de pilotage à distance de l'appareil 2 peut être prévu.

L'applicateur 6 n'est pas nécessairement une antenne à cornet et d'autres modes de réalisation de cet applicateur 6 sont possibles. Par exemple, l'applicateur 6 est remplacé par un applicateur présentant une ouverture ou une paroi transparente, présentant de très faibles pertes aux microondes, par l'intermédiaire de laquelle s'échappe le rayonnement électromagnétique. Un tel applicateur est par exemple conçu de façon proche aux applicateurs que l'on retrouve dans les fours micro-ondes. Dans un autre mode de réalisation, l'applicateur est réalisé conformément à l'enseignement de la demande US6157013A.

En variante, l'appareil de désherbage est identique à l'appareil 70 sauf que :
- la source 72 est omise, et
- l'appareil 70 comporte un mécanisme qui permet de raccorder, en alternance, la source 12 soit à l'extrémité du guide 8 soit à l'extrémité du guide 74 au moyen d'un commutateur de guide d'onde.
Ainsi, la même source 12 est utilisée, en alternance, pour générer les rayonnements 20 et 80. Dans ce cas, par exemple, la puissance de la source 12 est choisie comme décrit dans le cas de l'appareil 2 de manière à éliminer sélectivement la plante 24 lorsqu'elle est raccordée à l'extrémité du guide 8 et à éliminer sélectivement la plante 26 lorsqu'elle est raccordée à l'extrémité du guide 74.

L'appareil 70 peut aussi être adapté pour mettre en oeuvre un procédé de désherbage sélectif. Par exemple, dans un premier mode de fonctionnement, la source 72 est éteinte et seule la source 12 est allumée. Dans ce premier mode de fonctionnement, la puissance de la source 12 est réglée comme décrit dans le cas de l'appareil 2 pour éliminer uniquement les plantes 24. Dans un deuxième mode de fonctionnement, la source 12 est éteinte et seule la source 72 est allumée. Dans ce deuxième mode de fonctionnement, la puissance de la source 72 est réglée pour que la dose D₈₀ délivrée soit seulement létale pour les plantes 26. Ainsi, le même appareil peut être utilisé, en alternance, pour désherber sélectivement soit les plantes 24 soit les plantes 26.

En variante, les étapes 50 et 52 ne sont pas effectuées de façon simultanée. Par exemple, lors du déplacement de l'appareil de désherbage, la source de rayonnement électromagnétique est éteinte. Ensuite, lorsque l'appareil de désherbage a été placé sur la zone à désherber, la source de rayonnement électromagnétique est mise sous tension pendant la durée nécessaire pour appliquer la dose souhaitée de rayonnement électromagnétique sur la plante à éliminer.

La diminution de la dose létale, à efficacité constante, d'un procédé de désherbage non-sélectif causée par la mise en oeuvre de vecteurs de polarisation horizontal et vertical, se produit aussi pour des rayonnements électromagnétiques dont l'essentielle de la puissance n'est pas comprise entre 3 GHz et 300 GHz. Par exemple, cette amélioration peut aussi être observée lorsque l'essentielle de la puissance est centrée sur la fréquence de 2,45 GHz ou de 915 MHz ou toute autre fréquence utilisable dans un procédé de désherbage.

### Chapitre III : Avantages des modes de réalisation décrits.

Le fait d'exposer la surface foliaire de la plante à éliminer à une dose létale inférieure à 1,8D_{Lo}(fₘ) combinée à l'utilisation d'un rayonnement électromagnétique dont la puissance est essentiellement comprises entre 3 GHz et 300 GHz, permet d'éradiquer complètement la plante à éliminer ciblée tout en limitant la consommation d'énergie. En effet, la dose appliquée pour obtenir la même efficacité est nettement inférieure aux doses habituellement utilisées. Puisque la dose appliquée est réduite, la consommation d'énergie de l'appareil de désherbage est aussi réduite. Il a même été observé que, plus la fréquence du rayonnement électromagnétique appliqué est élevée, plus la dose létale minimale peut être diminuée. Il semble que cette diminution de la dose létale minimale dans la plage de fréquences allant de 3 GHz à 300 GHz est liée au fait que, dans cette plage de fréquences, plus la fréquence du rayonnement électromagnétique est élevée, plus le rendement de la transformation du rayonnement électromagnétique en chaleur dans la face foliaire des plantes à éliminer est efficace.

Par ailleurs, l'utilisation d'un rayonnement électromagnétique de fréquences supérieure à 3 GHz préserve plus efficacement le microbiote du sol. En effet, pour ces fréquences élevées, le rayonnement électromagnétique pénètre moins profondément à l'intérieur du sol.

Le fait d'appliquer des rayonnements électromagnétiques dont les vecteurs de polarisation sont, respectivement, vertical et horizontal, comme décrit en référence à l'appareil 70 ou 90, permet de diminuer la dose létale appliquée pour obtenir un désherbage non sélectif. Ce procédé de désherbage non-sélectif consomme donc encore moins d'énergie.

Le fait d'appliquer simultanément des rayonnements électromagnétiques avec des vecteurs de polarisation vertical et horizontal, comme décrit en référence à l'appareil 70 ou 90, permet d'accélérer la délivrance de la dose létale et donc d'obtenir un procédé de désherbage plus rapide, tout en limitant la consommation d'énergie.

Le fait que chaque vecteur de polarisation soit fixe dans le temps simplifie la réalisation de l'appareil de désherbage.

Le fait d'appliquer sur la plante 24 un rayonnement électromagnétique dont le vecteur de polarisation est seulement horizontal, permet d'accroître l'efficacité du transfert d'énergie entre l'applicateur et cette plante 24. En même temps, cela diminue l'efficacité du transfert d'énergie entre cet applicateur et la plante 26 à préserver. Dans ces conditions, il existe une dose prédéterminée, déterminable expérimentalement, qui est létale pour la plante 24 sans être létale pour la plante 26. Il devient alors possible, en appliquant cette dose déterminée expérimentalement, d'effectuer un désherbage sélectif.

L'application d'un rayonnement électromagnétique qui alterne entre les vecteurs de polarisation verticale et horizontale, permet de n'utiliser qu'une seule source de rayonnement électromagnétique pour générer ces deux vecteurs de polarisation. Cela permet donc de simplifier l'appareil de désherbage.

## Revendications

1. Procédé de désherbage par rayonnement électromagnétique, ce procédé comportant les étapes suivantes :
a) une étape (50) de placement d'une face émissive d'un applicateur en vis-à-vis de d'une plante à éliminer, puis
b) une étape (52) d'application, directement sur la surface foliaire de la plante à éliminer, d'une dose létale d'un rayonnement électromagnétique polarisé rayonné par la face émissive de l'applicateur,
- lors de l'étape b) (52), la dose létale appliquée par le rayonnement électromagnétique sur la surface foliaire de la plante à éliminer est inférieure à 1,8D_{Lo}(fₘ), où D_{Lo}(fₘ) est une dose optimale exprimée en J/cm² et définie par la relation suivante : D_{Lo}(fₘ) = 141,4 - 0,466fₘ, où fₘ est une fréquence moyenne du rayonnement électromagnétique appliqué, exprimée en GHz, cette fréquence moyenne étant égale à la moyenne arithmétique des fréquences du rayonnement électromagnétique appliqué en pondérant chacune de ces fréquences par la puissance du rayonnement électromagnétique à cette fréquence,
**caractérisé en ce que**, lors de l'étape b) (52), l'application sur la surface foliaire de la plante à éliminer du rayonnement électromagnétique comporte :
- l'application d'un premier rayonnement électromagnétique polarisé dont le vecteur de polarisation est parallèle au plan du sol à partir duquel pousse la plante à éliminer, et
- l'application d'un second rayonnement électromagnétique polarisé dont le vecteur de polarisation est perpendiculaire au plan du sol.

2. Procédé selon la revendication 1, dans lequel, lors de l'étape b) (52), la dose appliquée du rayonnement électromagnétique sur la surface foliaire de la plante à éliminer est inférieure à 1,5D_{Lo}(fₘ).

3. Procédé selon l'une quelconque des revendications précédentes, dans lequel les premier et second rayonnements électromagnétiques sont simultanément appliqués sur la surface foliaire de la plante à éliminer.

4. Procédé selon l'une quelconque des revendications précédentes, dans lequel, pendant toute la durée de l'étape b), les premier et second rayonnements électromagnétiques présentent chacun une polarisation rectiligne.

5. Procédé de désherbage non sélectif selon l'une quelconque des revendications 1 à 2, dans lequel, lors de l'étape b) (52), l'application du rayonnement électromagnétique comporte l'application d'un rayonnement électromagnétique présentant une polarisation elliptique dont le vecteur de polarisation tourne autour d'un axe parallèle au plan du sol à partir duquel pousse la plante à éliminer.

6. Procédé selon l'une quelconque des revendications précédentes, dans lequel 80% de la puissance du rayonnement électromagnétique est située dans la bande de fréquences allant de 3 GHz à 300 GHz.

7. Procédé selon la revendication 6, dans lequel lors de l'étape b) (52), 80% de l'énergie du rayonnement électromagnétique est située dans la bande de fréquences allant à 3 GHz à 30 GHz ou dans la bande de fréquences allant de 10 GHz à 30 GHz.

8. Appareil de désherbage pour la mise en oeuvre d'un procédé de désherbage conforme à l'une quelconque des revendications précédentes, cet appareil comportant :
- un ensemble d'une ou plusieurs sources (12; 72) générant, en combinaison, un rayonnement électromagnétique polarisé,
- un ensemble d'un ou plusieurs applicateurs (6; 76) équipés chacun d'une face émissive (30; 78) apte à être placée en vis-à-vis de la plante à éliminer, cet ensemble d'applicateurs étant apte à appliquer directement sur la surface foliaire de la plante à éliminer, le rayonnement électromagnétique polarisé généré par l'ensemble d'une ou plusieurs sources,
dans lequel l'ensemble d'une ou plusieurs sources est configuré pour que la dose létale du rayonnement électromagnétique généré, appliquée directement sur la surface foliaire de la plante à éliminer, soit inférieure à 1,8D_{Lo}(fₘ), où D_{Lo}(fₘ) est une dose optimale exprimée en J/cm² et définie par la relation suivante : D_{Lo}(fₘ) = 141,4 - 0,466fₘ, où fₘ est une fréquence moyenne du rayonnement électromagnétique appliqué, exprimée en gigahertz, cette fréquence moyenne étant égale à la moyenne arithmétique des fréquences du rayonnement électromagnétique appliqué en pondérant chacune de ces fréquences par la puissance du rayonnement électromagnétique à cette fréquence,
**caractérisé en ce que** l'ensemble d'une ou plusieurs sources est aussi configuré pour que l'application sur la surface foliaire de la plante à éliminer du rayonnement électromagnétique comporte :
- l'application d'un premier rayonnement électromagnétique polarisé dont le vecteur de polarisation est parallèle au plan du sol à partir duquel pousse la plante à éliminer, et
- l'application d'un second rayonnement électromagnétique polarisé dont le vecteur de polarisation est perpendiculaire au plan du sol.

## Patentansprüche

1. Verfahren zur Unkrautbekämpfung durch elektromagnetische Strahlung, wobei dieses Verfahren die folgenden Schritte aufweist:
a) einen Schritt (50) des Platzierens einer emittierenden Seite eines Applikators gegenüber einer zu vernichtenden Pflanze, dann
b) einen Schritt (52) der Anwendung, direkt auf die Blattfläche der zu vernichtenden Pflanze, einer tödlichen Dosis einer polarisierten elektromagnetischen Strahlung, die von der emittierenden Seite des Applikators ausgestrahlt wird,
- im Schritt b) (52) ist die durch die elektromagnetische Strahlung auf die Blattfläche der zu vernichtenden Pflanze angewendete tödliche Dosis niedriger als 1,8D_{Lo}(fₘ), wobei D_{Lo}(fₘ) eine optimale Dosis ausgedrückt in J/cm² und durch die folgende Beziehung : D_{Lo}(fₘ) = 141,4 - 0,466fₘ definiert ist, wobei fₘ eine mittlere Frequenz der angewendeten elektromagnetischen Strahlung ausgedrückt in GHz ist, wobei diese mittlere Frequenz gleich dem arithmetischen Mittel der Frequenzen der angewendeten elektromagnetischen Strahlung ist, indem jede dieser Frequenzen durch die Leistung der elektromagnetischen Strahlung bei dieser Frequenz gewichtet wird,
**dadurch gekennzeichnet, dass** im Schritt b) (52) die Anwendung der elektromagnetische Strahlung auf die Blattfläche der zu vernichtenden Pflanze aufweist:
- die Anwendung einer ersten polarisierten elektromagnetischen Strahlung, deren Polarisationsvektor parallel zur Ebene des Bodens ist, ausgehend von dem die zu entfernende Pflanze wächst, und
- die Anwendung einer zweiten polarisierten elektromagnetischen Strahlung, deren Polarisationsvektor lotrecht zur Ebene des Bodens ist.

2. Verfahren nach Anspruch 1, wobei im Schritt b) (52) die angewendete Dosis der elektromagnetischen Strahlung auf die Blattfläche der zu vernichtenden Pflanze niedriger ist als 1,5D_{Lo}(fₘ).

3. Verfahren nach einem der vorhergehenden Ansprüche, wobei die ersten und zweiten elektromagnetischen Strahlungen gleichzeitig auf die Blattfläche der zu vernichtenden Pflanze angewendet werden.

4. Verfahren nach einem der vorhergehenden Ansprüche, wobei während der ganzen Dauer des Schritts b) die ersten und zweiten elektromagnetischen Strahlungen je eine geradlinige Polarisation aufweisen.

5. Verfahren zur nicht selektiven Unkrautbekämpfung nach einem der Ansprüche 1 bis 2, wobei im Schritt b) (52) die Anwendung der elektromagnetischen Strahlung die Anwendung einer elektromagnetischen Strahlung aufweist, die eine elliptische Polarisation hat, deren Polarisationsvektor um eine Achse parallel zur Ebene des Bodens dreht, von dem aus die zu vernichtende Pflanze wächst.

6. Verfahren nach einem der vorhergehenden Ansprüche, wobei 80% der Leistung der elektromagnetischen Strahlung sich im Frequenzband von 3 GHz bis 300 GHz befindet.

7. Verfahren nach Anspruch 6, wobei im Schritt b) (52) 80% der Energie der elektromagnetischen Strahlung sich im Frequenzband von 3 GHz bis 30 GHz oder im Frequenzband von 10 GHz bis 30 GHz befindet.

8. Unkrautbekämpfungsgerät zur Durchführung eines Verfahrens zur Unkrautbekämpfung gemäß einem der vorhergehenden Ansprüche, wobei dieses Gerät aufweist:
- eine Gruppe einer oder mehrerer Quellen (12; 72) , die in Kombination eine polarisierte elektromagnetische Strahlung erzeugen,
- eine Gruppe eines oder mehrerer Applikatoren (6; 76), die je mit einer emittierenden Seite (30; 78) ausgestattet sind, die geeignet ist, gegenüber der zu vernichtenden Pflanze platziert zu werden, wobei diese Gruppe von Applikatoren geeignet ist, die von der Gruppe einer oder mehrerer Quellen erzeugte polarisierte elektromagnetische Strahlung direkt auf die Blattfläche der zu vernichtenden Pflanze anzuwenden,
wobei die Gruppe einer oder mehrerer Quellen konfiguriert ist, damit die direkt auf die Blattfläche der zu vernichtenden Pflanze angewendete tödliche Dosis der erzeugten elektromagnetischen Strahlung geringer ist als 1,8D_{Lo}(fₘ), wobei D_{Lo}(fₘ) eine optimale Dosis ausgedrückt in J/cm² und durch die folgende Beziehung : D_{Lo}(fₘ) = 141,4 - 0,466fₘ definiert ist, wobei fₘ eine mittlere Frequenz der angewendeten elektromagnetische Strahlung ausgedrückt in Gigahertz ist, wobei diese mittlere Frequenz gleich dem arithmetischen Mittel der Frequenzen der angewendeten elektromagnetischen Strahlung ist, indem jede dieser der Frequenzen durch die Leistung der elektromagnetischen Strahlung bei dieser Frequenz gewichtet wird,
**dadurch gekennzeichnet, dass** die Gruppe einer oder mehrerer Quellen auch konfiguriert ist, damit die Anwendung der elektromagnetischen Strahlung auf die Blattfläche der zu vernichtenden Pflanze aufweist:
- die Anwendung einer ersten polarisierten elektromagnetischen Strahlung, deren Polarisationsvektor parallel zur Ebene des Bodens ist, ausgehend von dem die zu entfernende Pflanze wächst, und
- die Anwendung einer zweiten polarisierten elektromagnetischen Strahlung, deren Polarisationsvektor lotrecht zur Ebene des Bodens ist.

## Claims

1. Method for achieving weed control through electromagnetic radiation, this method comprising the following steps:
a) a step (50) of placing an emissive face of an applicator facing a plant to be removed, then
b) a step (52) of applying, directly to the foliar surface of the plant to be removed, a lethal dose of polarized electromagnetic radiation radiated through the emissive face of the applicator,
- in step b) (52), the lethal dose applied through the electromagnetic radiation to the foliar surface of the plant to be removed is lower than 1.8Dₘ(fₘ), where D_{Lo}(fₘ) is an optimal dose expressed in J/cm² and defined by the following relationship: D_{Lo}(fₘ) = 141.4 - 0.466fₘ, where fₘ is an average frequency of the applied electromagnetic radiation, expressed in GHz, this average frequency being equal to the arithmetic mean of the frequencies of the applied electromagnetic radiation with each of these frequencies weighted by the power of the electromagnetic radiation at this frequency,
**characterized in that**, in step b) (52), application to the foliar surface of the plant to be removed of the electromagnetic radiation comprises:
• applying first polarized electromagnetic radiation the polarization vector of which is parallel to the plane of the ground from which the plant to be removed is growing, and
• applying second polarized electromagnetic radiation the polarization vector of which is perpendicular to the plane of the ground.

2. Method according to Claim 1, wherein, in step b) (52), the dose of electromagnetic radiation applied to the foliar surface of the plant to be removed is lower than 1.5 D_{Lo}(fₘ).

3. Method according to any one of the preceding claims, wherein the first electromagnetic radiation and second electromagnetic radiation are applied to the foliar surface of the plant to be removed simultaneously.

4. Method according to any one of the preceding claims, wherein, throughout step b), the first electromagnetic radiation and second electromagnetic radiation each have a linear polarization.

5. Method for achieving non-selective weed control according to either one of Claims 1 to 2, wherein, in step b) (52), application of the electromagnetic radiation comprises applying electromagnetic radiation having an elliptical polarization the polarization vector of which rotates about an axis parallel to the plane of the ground from which the plant to be removed is growing.

6. Method according to any one of the preceding claims, wherein 80% of the power of the electromagnetic radiation is located in a frequency band extending from 3 GHz to 300 GHz.

7. Method according to Claim 6, wherein, in step b) (52), 80% of the energy of the electromagnetic radiation is located in the frequency band extending from 3 GHz to 30 GHz or in the frequency band extending from 10 GHz to 30 GHz.

8. Weed-control apparatus for implementing a weed-control method according to any one of the preceding claims, this apparatus comprising:
- a set of one or more sources (12; 72) generating, in combination, polarized electromagnetic radiation,
- a set of one or more applicators (6; 76) each equipped with an emissive face (30; 78) able to be placed facing the plant to be removed, this set of applicators being able to apply, directly to the foliar surface of the plant to be removed, the polarized electromagnetic radiation generated by the set of one or more sources,
in which the set of one or more sources is configured so that the generated lethal dose of electromagnetic radiation applied directly to the foliar surface of the plant to be removed is lower than 1.8D_{Lo}(fₘ), where D_{Lo}(fₘ) is an optimal dose expressed in J/cm² and defined by the following relationship: D_{Lo}(fₘ) = 141.4 - 0.466fₘ, where fₘ is an average frequency of the applied electromagnetic radiation, expressed in gigahertz, this average frequency being equal to the arithmetic mean of the frequencies of the applied electromagnetic radiation with each of these frequencies weighted by the power of the electromagnetic radiation at this frequency,
**characterized in that** the set of one or more sources is also configured so that application to the foliar surface of the plant to be removed of the electromagnetic radiation comprises:
• applying first polarized electromagnetic radiation the polarization vector of which is parallel to the plane of the ground from which the plant to be removed is growing, and
• applying second polarized electromagnetic radiation the polarization vector of which is perpendicular to the plane of the ground.
